# EUROPÄISCHE PATENTSCHRIFT

(11) **EP 1 273 857 B1**
(45) Veröffentlichungstag und Bekanntmachung des Hinweises auf die Patenterteilung: **31.08.2005**
(21) Anmeldenummer: 01116417.5
(22) Anmeldetag: 06.07.2001
(51) Int. Cl.: F25B 9/06

(54) **Expansionsturbine für Tieftemperaturanwendungen**
Turbo expander for cryogenic uses
Turbine de détente pour des utilisations cryogéniques

(43) Veröffentlichungstag der Anmeldung: 08.01.2003
(73) Patentinhaber: ATLAS COPCO ENERGAS GMBH, 50999 Köln (DE)
(72) Erfinder: Bosen, Werner Dipl.-Ing., 51143 Köln (DE)
(74) Vertreter: Albrecht, Rainer Harald

(56) Entgegenhaltungen:
- EP-A- 0 256 518
- EP-A- 0 454 616
- WO-A-99/43927
- DE-A- 3 715 225
- DE-A- 19 910 579
- US-A- 4 786 238
- US-A- 5 993 069
- PATENT ABSTRACTS OF JAPAN vol. 015, no. 452 (M-1180), 18. November 1991 (1991-11-18) & JP 03 191262 A (HITACHI LTD), 21. August 1991 (1991-08-21)
- PATENT ABSTRACTS OF JAPAN vol. 1999, no. 14, 22. Dezember 1999 (1999-12-22) & JP 11 247870 A (NTN CORP), 14. September 1999 (1999-09-14)
- PATENT ABSTRACTS OF JAPAN vol. 009, no. 014 (M-352), 22. Januar 1985 (1985-01-22) & JP 59 161201 A (OKUMA TEKKOSHO KK), 12. September 1984 (1984-09-12)

## Beschreibung

Die Erfindung betrifft eine Expansionsturbine für Tieftemperaturanwendungen mit
einer von einem Kaltgas beaufschlagten Turbinenstufe,
einem auf einer Welle angeordneten Turbinenrad und
einer minimalöl- oder fettgeschmierten Wälzlagerung der Welle,
wobei die Wälzlagerung ein an die Turbinenstufe angrenzendes Wälzlager umfasst, das einen Lagerinnenring, Wälzkörper und einen gehäuseseitig abgestützten Lageraußenring aufweist. Bei Tieftemperaturanwendungen z. B. in Gastrennungs- oder Aufbereitungsanlagen ist das in der Turbinenstufe angeordnete Turbinenrad Temperaturen zwischen -50°C und -200°C ausgesetzt.

Das Turbinenrad ist über eine große Metallkontaktfläche unter hoher Flächenpressung mit der metallischen Welle verbunden. Die Welle bildet dabei eine Wärmebrücke, über die ein großer Wärmestrom aus dem die Wälzlager aufnehmenden Wälzlagerraum in die Turbinenstufe abfließt. Der abfließende Wärmestrom lässt das Schmiermittel der Wälzlagerung stocken. Die Gefahr, dass das Schmiermittel durch Abkühlung nicht mehr fließfähig ist und seine Schmierfähigkeit verliert, ist besonders ausgeprägt bei fettgeschmierten oder mit einer Minimalölmenge geschmierten Wälzlagern. Die bei Rotation auftretende Verlustwärme der Wälzlager reicht oft nicht aus, um das Schmiermittel sicher flüssig zu halten. Bei Tieftemperaturanwendungen sind daher minimalöl- oder fettgeschmierte Wälzlagerungen der Laufradwelle einer Expansionsturbine sehr problematisch.

Der Erfindung liegt die Aufgabe zugrunde, bei einer Expansionsturbine für Tieftemperaturanwendungen eine ausreichende Kälteisolierung für das turbinenseitige Wälzlager vorzusehen, damit die Grenzschmierung im Betrieb und somit die Funktion der Wälzlagerung sichergestellt ist.

Zur Lösung dieser Aufgabe lehrt die Erfindung, dass zwischen dem Innenring des an die Turbinenstufe angrenzenden Wälzlagers und der Welle eine Isolierbüchse aus Ingenieurkeramik angeordnet ist, die den Lagerinnenring von der kalten Welle thermisch trennt. Außerdem ist vorgesehen, dass die Isolierbüchse turbinenseitig eine scheibenförmige Schulter aufweist, die den Wälzlagerraum von der Turbinenkammer gegen Schmiermittelverluste abdichtet und thermisch isoliert. Die scheibenförmige Schulter erfüllt zwei Funktionen. Sie wirkt als Schleuderring, der ein Austreten von Schmiermittel aus dem Wälzlagerraum verhindert. Ferner bildet sie einen Isolierkörper, der den Wärmeabfluss aus dem Wälzlagerraum in die Turbinenstufe reduziert. An die Stelle einer scheibenförmigen Schulter kann auch eine separate Scheibe aus Ingenieurkeramik treten, die auf der Welle angeordnet ist und den Wälzlagerraum von der Turbinenstufe gegen Schmiermittelverluste abdichtet und thermisch trennt.

Ingenieurkeramik, aus der die Isolierbüchse gefertigt ist, zeichnet sich durch eine niedrige Wärmeleitfähigkeit aus, wobei der lineare Wärmeausdehnungskoeffizient des Werkstoffes nur wenig von den in Frage kommenden Stählen der Welle und des Lagerinnenrings abweicht. Aufgrund der im Wesentlichen übereinstimmenden Wärmeausdehnungskoeffizienten der Materialien ist bei einem Tieftemperaturbetrieb sichergestellt, dass die für die Funktion von Hochgenauigkeitswälzlagern erforderlichen, sehr kleinen Montagespiele eingehalten werden und dass die Wälzlager weder thermisch verspannt werden, noch ihre Innenlagerringe sich lösen können. Vorzugsweise weist die Ingenieurkeramik der Isolierbüchse eine Wärmeleitfähigkeit von 1,9 bis 2,5 W/(mK) und einen Wärmeausdehnungskoeffizienten zwischen 8·10⁻⁶ und 11·10⁻⁶K⁻¹ auf. In einer bevorzugten Ausführung der Erfindung besteht die Ingenieurkeramik der Isolierbüchse aus Zirkonoxid und gefügestabilisierenden Zusätzen aus beispielsweise Yttriumoxid.

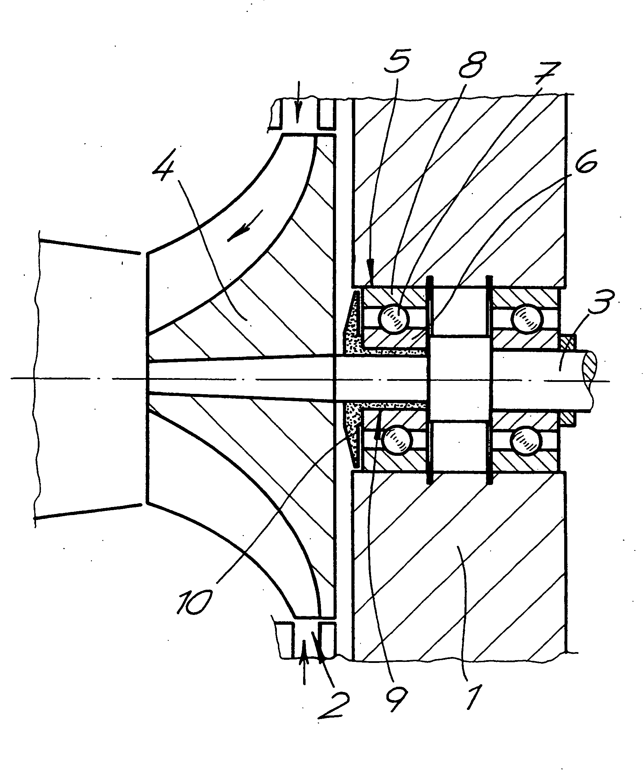

Im Folgenden wird die Erfindung anhand einer lediglich ein Ausführungsbeispiel darstellenden Zeichnung erläutert. Die einzige Figur zeigt schematisch den Längsschnitt durch eine Expansionsturbine für Tieftemperaturanwendungen vorzugsweise im Temperaturbereich zwischen -50°C und -200°C.

Zum grundsätzlichen Aufbau der in der Figur dargestellten Expansionsturbine gehören ein Lagergehäuse 1 mit einer von einem Kaltgas beaufschlagten Turbinenstufe 2, ein auf einer Welle 3 fliegend angeordnetes Turbinenrad 4 und eine minimalöl- oder fettgeschmierte Wälzlagerung der Welle. Die Wälzlagerung umfasst ein an die Turbinenstufe 2 angrenzendes Wälzlager 5, das einen Lagerinnenring 6, Wälzkörper 7 und einen gehäuseseitig abgestützten Lageraußenring 8 aufweist.

Das Kaltgas mit einer Temperatur zwischen -50°C und -160°C tritt am Umfang des Turbinenrades 4 in die Turbinenstufe 2 ein und wird in der Expansionsturbine auf -100°C bis -200°C abgekühlt. Das Turbinenrad 4 ist über eine große Metallkontaktfläche unter hoher Flächenpressung mit dem Wellenende der aus einem hochfesten Vergütungsstahl bestehenden Welle 3 verbunden. Die Welle 3 bildet eine Wärmebrücke. Um das Schmiermittel der Wälzlagerung flüssig zu halten, ist eine Kälteisolierung für das an die Turbinenstufe 2 angrenzende Wälzlager 5 erforderlich. Zu diesem Zweck ist zwischen dem Lagerinnenring 6 und der Welle 3 eine Isolierbüchse 9 aus Ingenieurkeramik angeordnet, die den Lagerinnenring 6 von der kalten Welle 3 thermisch trennt. Ferner weist die Isolierbüchse 9 turbinenseitig eine scheibenförmige Schulter 10 auf, die den Wälzlagerraum von der Turbinenkammer 2 thermisch isoliert und außerdem gegen Schmiermittelverluste abdichtet. An die Stelle der scheibenförmigen Schulter 10 kann auch eine separate Scheibe aus Ingenieurkeramik vorgesehen sein, die auf der Welle 3 angeordnet ist. Die Isolierbüchse 9 sitzt mit einem festen Sitz auf der Welle 3. Bei Rotation der Welle 3 wirkt die scheibenförmige Schulter 10 bzw. die aus Ingenieurkeramik bestehende Scheibe als Schleuderring, der ein Austreten von Schmiermittel aus dem Wälzlagerraum verhindert.

Die Ingenieurkeramik, aus der die Isolierbüchse 9 gefertigt ist, weist eine im Vergleich zu Stahl sehr niedrige Wärmeleitfähigkeit von 1,9 bis 2,5 W/(mK) auf. Der Wärmeausdehnungskoeffizient liegt im Bereich zwischen 8·10⁻⁶ und 11·10⁻⁶K⁻¹ und weicht von den Werten der in Frage kommenden Stahlsorten der Welle 3 und des Lagerinnenrings 6 nur wenig ab. Dadurch wird ein unzulässiges, thermisches Verspannen oder Lösen des Wälzlagers 5 bei einem Tieftemperaturbetrieb mit dem für die Funktion eines Hochgenauigkeitswälzlagers erforderlichen, sehr kleinen Montagespiel sicher vermieden.

Im Ausführungsbeispiel und nach bevorzugter Ausführung der Erfindung besteht die Ingenieurkeramik der Isolierbüchse 9 aus Zirkonoxid mit gefügestabilisierenden Zusätzen, beispielsweise Yttriumoxid.

## Patentansprüche

1. Expansionsturbine für Tieftemperaturanwendungen mit
einer von einem Kaltgas beaufschlagten Turbinenstufe (2),
einem auf einer Welle (3) angeordneten Turbinenrad (4) und
einer minimalöl- oder fettgeschmierten Wälzlagerung der Welle (3),
wobei die Wälzlagerung ein an die Turbinenstufe (2) angrenzendes Wälzlager (5) umfasst, das einen Lagerinnenring (6), Wälzkörper (7) und einen gehäuseseitig abgestützten Lageraußenring (8) aufweist, **dadurch gekenn- zeichnet**, dass zwischen dem Lagerinnenring (6) und der Welle (3) eine Isolierbüchse (9) aus Ingenieurkeramik angeordnet ist, die den Lagerinnenring (6) von der kalten Welle (3) thermisch trennt, und dass der Wälzlagerraum von der Turbinenstufe (2) gegen Schmiermittelverluste abgedichtet und thermisch isoliert ist, indem die Isolierbüchse (9) turbinenkammerseitig eine scheibenförmige Schulter (10) aufweist oder auf der Welle (3) eine Scheibe aus Ingenieurkeramik angeordnet ist.

2. Expansionsturbine nach Anspruch 1, **dadurch gekennzeichnet, dass** die Ingenieurkeramik der Isolierbüchse (9) bzw. der Scheibe eine Wärmeleitfähigkeit von 1,9 bis 2,5 W/(mK) aufweist.

3. Expansionsturbine nach Anspruch 1 oder 2, **dadurch gekennzeichnet, dass** die Ingenieurkeramik der Isolierbüchse (9) einen Wärmeausdehnungskoeffizienten zwischen 8·10⁻⁶ und 11·10⁻⁶K⁻¹ aufweist.

4. Expansionsturbine nach einem der Ansprüche 1 bis 3, **dadurch gekennzeichnet, dass** die Ingenieurkeramik der Isolierbüchse (9) aus Zirkonoxid mit gefügestabilisierenden Zusätzen besteht.

## Claims

1. An expansion turbine for low-temperature applications comprising a turbine stage (2) acted upon by a cold gas, a turbine wheel (4) arranged on a shaft (3) and a roller mounting of the shaft (3) lubricated with a minimal amount of oil or grease,
wherein the roller mounting comprises a roller bearing (5) adjacent to the turbine stage (2), comprising a bearing inner ring (6), roller bodies (7) and a bearing outer ring (8) supported on the housing side; **characterised in that** an insulating bushing (9) made of engineering ceramic is arranged between the bearing inner ring (6) and the shaft (3), which thermally separates the bearing inner ring (6) from the cold shaft (3) and that the roller bearing compartment is sealed from the turbine stage (2) to prevent loss of lubricant and is thermally insulated, wherein the insulating bushing(9) has a disk-shaped shoulder (1) on the side of the turbine chamber or a disk made of engineering ceramic is arranged on the shaft (3).

2. The expansion turbine according to claim 1, **characterised in that** the engineering ceramic of the insulating bushing (9) or the disk has a thermal conductivity of 1.9 to 2.5 W/(mK).

3. The expansion turbine according to claim 1 or 2, **characterised in that** the engineering ceramic of the insulating bushing(9) has a coefficient of thermal expansion between 8 · 10⁻⁶ and 11 · 10⁻⁶ K⁻¹.

4. The expansion turbine according to any one of claims 1 to 3, **characterised in that** the engineering ceramic of the insulating bushing(9) consists of zirconium oxide with structure-stabilising additives.

## Revendications

1. Turbine à détente pour des applications à basse température comprenant
- un étage de turbine (2) alimenté en gaz froid,
- une roue de turbine (4) disposée sur un arbre (3) et
- un montage sur palier à roulement de l'arbre (3) à lubrification d'huile ou de graisse minimale,
le montage sur palier à roulement comprenant un roulement (5) limitrophe à l'étage de turbine (2), qui présente un anneau intérieur de palier (6), un corps de roulement (7) et un anneau de palier extérieur (8) supporté côté carter, **caractérisée en ce qu'**un manchon isolant (9) en céramique technique, qui sépare thermiquement l'anneau intérieur de palier (6) de l'arbre froid (3), est disposé entre l'anneau intérieur de palier (6) et l'arbre (3), et **en ce que** l'espace de palier à roulement est étanchéifié et isolé thermiquement par rapport à l'étage de turbine (2) contre des pertes de lubrifiant, le manchon isolant (9) présentant un épaulement (10) en forme de disque sur le côté chambre de turbine ou un disque en céramique technique étant disposé sur l'arbre (3).

2. Turbine à détente suivant la revendication 1, **caractérisée en ce que** la céramique technique du manchon isolant (9) et/ou du disque présente une conductivité thermique de 1,9 à 2,5 W/(mK).

3. Turbine à détente suivant la revendication 1 ou 2, **caractérisée en ce que** la céramique technique du manchon isolant (9) présente un coefficient de dilatation thermique compris entre 8.10⁻⁶ et 11.10⁻⁶K⁻¹.

4. Turbine à détente suivant l'une des revendications 1 à 3, **caractérisée en ce que** la céramique technique du manchon isolant (9) se compose de zircone avec des additifs stabilisateurs de structure.
